(19) Europäisches Patentamt
European Patent Office
Office européen des brevets

(11) EP 0 984 695 B1

(12) **EUROPÄISCHE PATENTSCHRIFT**

(45) Veröffentlichungstag und Bekanntmachung des Hinweises auf die Patenterteilung:
**27.03.2002 Patentblatt 2002/13**

(21) Anmeldenummer: **98928274.4**

(22) Anmeldetag: **15.05.1998**

(51) Int Cl.[7]: **A01N 47/24**
// (A01N47/24, 57:12)

(86) Internationale Anmeldenummer:
**PCT/EP98/02877**

(87) Internationale Veröffentlichungsnummer:
**WO 98/53691 (03.12.1998 Gazette 1998/48)**

(54) **FUNGIZIDE MISCHUNGEN**
FUNGICIDAL MIXTURES
MELANGES FONGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **28.05.1997 DE 19722225**

(43) Veröffentlichungstag der Anmeldung:
**15.03.2000 Patentblatt 2000/11**

(73) Patentinhaber: **BASF AKTIENGESELLSCHAFT**
**67056 Ludwigshafen (DE)**

(72) Erfinder:
- **SCHELBERGER, Klaus**
  **D-67161 Gönnheim (DE)**
- **SCHERER, Maria**
  **D-76829 Landau (DE)**
- **SAUR, Reinhold**
  **D-67459 Böhl-Iggelheim (DE)**
- **SAUTER, Hubert**
  **D-68167 Mannheim (DE)**
- **MÜLLER, Bernd**
  **D-67227 Frankenthal (DE)**
- **BIRNER, Erich**
  **D-67317 Altleiningen (DE)**
- **LEYENDECKER, Joachim**
  **D-68526 Ladenburg (DE)**
- **AMMERMANN, Eberhard**
  **D-64646 Heppenheim (DE)**
- **LORENZ, Gisela**
  **D-67434 Neustadt (DE)**
- **STRATHMANN, Siegfried**
  **D-67117 Limburgerhof (DE)**

(56) Entgegenhaltungen:
**EP-A- 0 741 970**
**WO-A-96/01256**
**WO-A-96/01258**
**WO-A-96/03047**
**WO-A-97/03563**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft fungizide Mischungen, welche

a) ein Carbamat der Formel I,

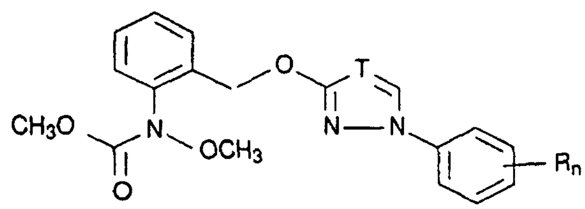

I

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht, und

b) einen Wirkstoff der Formel II,

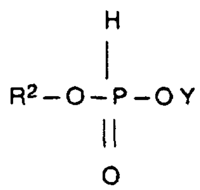

(II)

in der die Substituenten die folgende Bedeutung haben:

Y Wasserstoff, ein Metallatom der I. bis III. Hauptgruppe des Periodensystems oder eine Gruppe $NR^3R^4R^5R^6$ ;

$R^2$ Wasserstoff,eine $C_1$-$C_{18}$-Alkylgruppe, welche mit Halogen oder einer Nitrogruppe substituiert sein kann , eine $C_2$-$C_8$-Alkenyl, oder $C_2$-$C_8$-Alkinylgruppe, welche mit Halogen oder einer Nitrogruppe substituiert sein kann, eine $C_1$-$C_8$ Alkoxy-$C_1$-$C_8$-alkyl oder eine $C_2$-$C_8$-Alkenyl-$C_1$-$C_8$-alkylgruppe, eine ggf. substituierte Arylgruppe mit 6 bis 14 C-Atomen, eine $C_3$-$C_7$-Cycloalkylgruppe, eine $C_1$-$C_4$-Alkylarylgruppe oder eine heterocyclische Gruppe mit 5 oder 6 Ringatomen und einem Heteroatom aus der Gruppe N, O oder S, wobei die heterocyclische Gruppe direkt oder über eine aliphatische Kette an das Sauerstoffatom gebunden ist, und

$R^3$-$R^6$ unabhängig voneinander eine $C_1$-$C_4$-Alkylgruppe oder eine $C_1$-$C_4$-Hydroxyalkylgruppe

in einer synergistisch wirksamen Menge enthalten.

Außerdem betrifft die Erfindung Verfahren zur Bekämpfung von Schadpilzen mit Mischungen der Verbindungen I und II und die Verwendung der Verbindungen I und II zur Herstellung derartiger Mischungen.
Die Verbindungen der Formel I, ihre Herstellung und ihre Wirkung gegen Schadpilze sind aus der Literatur bekannt (WO-A 96/01,256 und 96/01,258).
Die Verbindungen II werden in der Literatur als Fungizide und Insektizide beschrieben (z.B. DE 24 63 046 und darin zitierte Literatur. Ein bekannter Vertreter dieser Klasse von Wirkstoffen ist unter dem common name Fosetyl bzw. Fosetyl-Al kommerziell erhältlich.
Verfahren zur Herstellung der Verbindungen der Formel II sind dem Fachmann an sich bekannt und bedürfen daher hier keiner weiteren Erwähnung.
Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und II oder bei Anwendung der Verbindungen I und II nacheinander Schadpilze besser bekämpfen lassen als mit den Einzelverbindungen.

Die Formel I repräsentiert insbesondere Carbamate, in denen die Kombination der Substituenten einer Zeile der folgenden Tabelle entspricht:

Tabelle 1:

| **Nr.** | **T** | **$R_n$** |
|---|---|---|
| I.1 | N | 2-F |
| I.2 | N | 3-F |
| I.3 | N | 4-F |
| I.4 | N | 2-Cl |
| Nr. | T | $R_n$ |
| I.5 | N | 3-Cl |
| I.6 | N | 4-Cl |
| I.7 | N | 2-Br |
| I.8 | N | 3-Br |
| I.9 | N | 4-Br |
| I.10 | N | 2-$CH_3$ |
| I.11 | N | 3-$CH_3$ |
| I.12 | N | 4-$CH_3$ |
| I.13 | N | 2-$CH_2CH_3$ |
| I.14 | N | 3-$CH_2CH_3$ |
| I.15 | N | 4-$CH_2CH_3$ |
| I.16 | N | 2-$CH(CH_3)_2$ |
| I.17 | N | 3-$CH(CH_3)_2$ |
| I.18 | N | 4-$CH(CH_3)_2$ |
| I.19 | N | 2-$CF_3$ |
| I.20 | N | 3-$CF_3$ |
| I.21 | N | 4-$CF_3$ |
| I.22 | N | 2,4-$F_2$ |
| I.23 | N | 2,4-$Cl_2$ |
| I.24 | N | 3,4-$Cl_2$ |
| I.25 | N | 2-Cl, 4-$CH_3$ |
| I.26 | N | 3-Cl, 4-$CH_3$ |
| I.27 | CH | 2-F |
| I.28 | CH | 3-F |
| I.29 | CH | 4-F |
| I.30 | CH | 2-Cl |
| I.31 | CH | 3-Cl |
| I.32 | CH | 4-Cl |
| I.33 | CH | 2-Br |

Tabelle 1: (fortgesetzt)

| Nr. | T | $R_n$ |
|---|---|---|
| I.34 | CH | 3-Br |
| I.35 | CH | 4-Br |
| I.36 | CH | 2-$CH_3$ |
| I.37 | CH | 3-$CH_3$ |
| I.38 | CH | 4-$CH_3$ |
| I.39 | CH | 2-$CH_2CH_3$ |
| I.40 | CH | 3-$CH_2CH_3$ |
| I.41 | CH | 4-$CH_2CH_3$ |
| I.42 | CH | 2-$CH(CH_3)_2$ |
| I.43 | CH | 3-$CH(CH_3)_2$ |
| I.44 | CH | 4-$CH(CH_3)_2$ |
| I.45 | CH | 2-$CF_3$ |
| I.46 | CH | 3-$CF_3$ |
| I.47 | CH | 4-$CF_3$ |
| I.48 | CH | 2,4-$F_2$ |
| I.49 | CH | 2,4-$Cl_2$ |
| I.50 | CH | 3,4-$Cl_2$ |
| I.51 | CH | 2-Cl, 4-$CH_3$ |
| I.52 | CH | 3-Cl, 4-$CH_3$ |

Besonders bevorzugt werden die Verbindungen I.12, I.23, I.32 und I.38.

Die allgemeine Formel II steht insbesondere repräsentativ für Verbindungen in denen $R^2$ für Wasserstoff oder eine $C_1$-$C_4$-Alkylgruppe und insbesondere für eine Ethylgruppe (-$CH_2CH_3$) und Y für ein Metall der III. Gruppe des Periodensystems steht. Geeignet sind auch Metalle der ersten und zweiten Nebengruppe wie Li, K, Na, Cs, Mg oder Ca, um nur einige beispielhaft zu nennen.

Grundsätzlich sind jedoch auch Verbindungen II geeignet, in denen $R^2$ und $R^3$-$R^6$ die eingangs genannten Bedeutungen haben.

Besonders bevorzugt wird als Verbindung II bevorzugt der unter der Bezeichnung Fosetyl bekannte Wirkstoff bzw. dessen Al-Salz Fosetyl-Al.

Die Verbindungen der Formel I können in Bezug auf die C=Y- bzw. C=CH- oder C=N-Doppelbindungen in der E- oder der Z-Konfiguration (in Bezug auf die Carbonsäurefunktion) vorliegen. Demgemäß können sie in der erfindungsgemäßen Mischung jeweils entweder als reine E- oder Z-Isomere oder als E/Z-Isomerenmischung Verwendung finden. Bevorzugt findet die E/Z-Isomerenmischung oder das Z-Isomer Anwendung, wobei das Z-Isomere besonders bevorzugt ist.

Die C=N-Doppelbindungen der Oximethergruppierungen in der Seitenkette der Verbindungen I können jeweils als reine E- oder Z-Isomere oder als E/Z-Isomerengemische vorliegen. Die Verbindungen I können sowohl als Isomerengemische als auch als reine Isomere in den erfindungsgemäßen Mischungen verwendet werden. Im Hinblick auf ihre Verwendung werden insbesondere Verbindungen I bevorzugt, in denen die endständige Oximethergruppierung der Seitenkette in der cis-Konfiguration vorliegt ($OCH_3$ zu ZR').

Die Verbindungen I sind wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder

verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I, und II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 0.05:1 bis 20:1, vorzugsweise 0.1:1 bis 10:1, insbesondere 0.2:1 bis 5:1 (II:I) angewandt.

Die Aufwandmengen der erfindungsgemäßen Mischungen liegen je nach Art des gewünschten Effekts für die Verbindungen I bei 0.005 bis 0.5 kg/ha, vorzugsweise 0.05 bis 0.5 kg/ha, insbesondere 0.05 bis 0.2 kg/ha.

Die Aufwandmengen für die Verbindungen II liegen entsprechend in der Regel bei 0.01 bis 2 kg/ha, vorzugsweise 0.05 bis 1 kg/ha, insbesondere 0.1 bis 0.8 kg/ha.

Bei der Saatgutbehandlung werden im allgemeinen Aufwandmengen an Mischung von 0,001 bis 100 g/kg Saatgut, vorzugsweise 0,01 bis 50 g/kg, insbesondere 0,01 bis 10 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren,

z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und II oder III oder IV oder der Mischung aus den Verbindungen I und II, III oder IV mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II . Die Wirkstoffe werden dabei in einer Reinheit von 90 % bis 100 %, vorzugsweise 95 % bis 100 % (nach NMR- oder HPLC-Spektrum) eingesetzt.

Die Verbindungen I oder II bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Anwendungsbeispiel 1 - Wirksamkeit gegen Plasmopara viticola

Blätter von Topfreben der Sorte "Müller-Thurgau" wurden mit wäßriger Wirkstoffaufbereitung, die mit einer Stammlösung aus 10 % Wirkstoff, 63 % Cyclohexanon und 27 % Emulgiermittel angesetzt wurde, bis zur Tropfnässe besprüht. Um die Dauerwirkung der Substanzen beurteilen zu können, wurden die Pflanzen nach dem Antrocknen des Spritzbelages für 7 Tage im Gewächshaus aufgestellt. Erst dann wurden die Blätter mit einer wäßrigen Zoosporenaufschwemmung von Plasmopara viticola inokuliert. Danach wurden die Reben zunächst für 48 Stunden in einer wasserdampfgesättigten Kammer bei 24°C und anschließend für 5 Tage im Gewächshaus bei Temperaturen zwischen 20 und 24°C und anschliessend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y + z - x \cdot y \cdot z/100$$

E zu erwartender Wirkungsgrad, ausgedrückt in % der unbehandelten Kontrolle, beim Einsatz der Mischung aus den Wirkstoffen A, B und C in den Konzentrationen a, b und c

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

z der Wirkungsgrad, ausgedrückt in % der unbehandelten Kontrolle, beim Einsatz des Wirkstoffs C in der Konzentration c

Der Wirkungsgrad (W) wird nach der Formel von Abbot wie folgt berechnet:

$$W = (1 - \alpha) \cdot 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Tabelle 2

| Bsp. | Wirkstoff | Wirkstoffkonzentration in der Spritzbrühe in ppm | Wirkungsgrad in % der unbehandelten Kontrolle |
|---|---|---|---|
| 1V | Kontrolle (unbehandelt) | (100 % Befall) | 0 |
| 2V | Verbindung I.32 aus Tab. 1 | 0,5 | 60 |
| | | 0,25 | 50 |
| 3V | II (= Fosethyl-Aluminium) | 5 | 0 |
| | | 2,5 | 0 |

Tabelle 3

| Bsp. | erfindungsgemäße Mischungen | beobachteter Wirkungsgrad | berechneter Wirkungsgrad*) |
|---|---|---|---|
| 4 | 0,5 ppm I.32 + 5 ppm II (Mischung 1 : 10) | 90 | 60 |
| 5 | 0,25 ppm I.32 + 2,5 ppm II (Mischung 1 : 10) | 80 | 50 |

*) berechnet nach der Colby-Formel

Aus den Ergebnissen des Versuches geht hervor, daß der beobachtete Wirkungsgrad in allen Mischungsverhältnissen höher ist, als nach der Colby-Formel vorausberechnete Wirkungsgrad.

## Patentansprüche

**1.** Fungizide Mischung, enthaltend

a) ein Carbamat der Formel I,

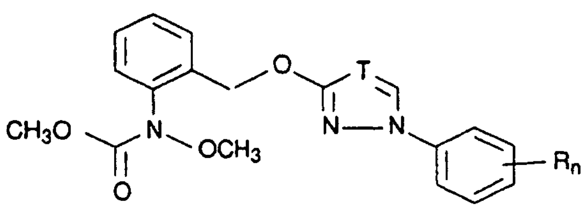

I

in der T CH oder N bedeutet, n für 0, 1 oder 2 steht und R Halogen, $C_1$-$C_4$-Alkyl oder $C_1$-$C_4$-Halogenalkyl

bedeutet, wobei die Reste R verschieden sein können, wenn n für 2 steht, und

b) einen Wirkstoff der Formel II,

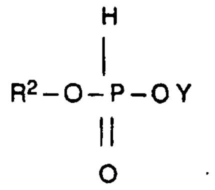

(II)

in der die Substituenten die folgende Bedeutung haben:

Y Wasserstoff, ein Metallatom der I. bis III. Hauptgruppe des Periodensystems oder eine Gruppe $NR^3R^4R^5R^6$ ;

$R^2$ Wasserstoff, eine $C_1$-$C_{18}$-Alkylgruppe, welche mit Halogen oder einer Nitrogruppe substituiert sein kann , eine $C_2$-$C_8$-Alkenyl, oder $C_2$-$C_8$-Alkinylgruppe, welche mit Halogen oder einer Nitrogruppe substituiert sein kann, eine $C_1$-$C_8$ Alkoxy-$C_1$-$C_8$-alkyl oder eine $C_2$-$C_8$-Alkenyl-$C_1$-$C_8$-alkylgruppe, eine ggf. substituierte Arylgruppe mit 6 bis 14 C-Atomen, eine $C_3$-$C_7$-Cycloalkylgruppe, eine $C_1$-$C_4$-Alkylarylgruppe oder eine heterocyclische Gruppe mit 5 oder 6 Ringatomen und einem Heteroatom aus der Gruppe N, O oder S, wobei die heterocyclische Gruppe direkt oder über eine aliphatische Kette an das Sauerstoffatom gebunden ist, und

$R^3$-$R^6$ unabhängig voneinander eine $C_1$-$C_4$-Alkylgruppe oder eine $C_1$-$C_4$-Hydroxyalkylgruppe

in einer synergistisch wirksamen Menge.

**2.** Fungizide Mischung nach Anspruch 1, enthaltend eine Verbindung der Formel II, wobei Y für ein Metall der III. Hauptgruppe steht.

**3.** Fungizide Mischung nach Anspruch 2, wobei das Metall der III. Hauptgruppe Al ist.

**4.** Fungizide Mischung nach einem der Ansprüche 1 bis 3, enthaltend eine Verbindung II in der $R^2$ für Wasserstoff oder eine $C_1$-$C_4$-Alkylgruppe steht.

**5.** Fungizide Mischung nach Anspruch 1, enthaltend eine Verbindung der Formel II, in der Y für Al und $R^2$ für $CH_2$-$CH_3$ steht.

**6.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I gemäß Anspruch 1 und einer Verbindung der Formel II gemäß Anspruch 1 behandelt.

**7.** Verfahren nach Anspruch 6, **dadurch gekennzeichnet, daß** man die Schadpilze, deren Lebensraum oder die von ihnen freizuhaltenden Pflanzen, Samen, Böden, Flächen, Materialien oder Räume mit 0,005 bis 0,5 kg/ha einer Verbindung I gemäß Anspruch 1 behandelt.

**8.** Verfahren nach Anspruch 6, **dadurch gekennzeichnet, daß** man die Schadpilze, deren Lebensraum oder die von ihnen freizuhaltenden Pflanzen, Samen, Böden, Flächen, Materialien oder Räume mit 0.01 bis 2 kg/ha einer Verbindung II gemäß Anspruch 1 behandelt.

## Claims

**1.** A fungicidal mixture, comprising

a) a carbamate of the formula I,

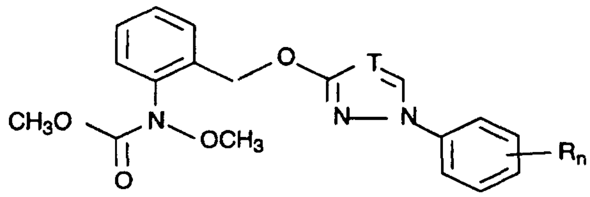

I

where T is CH or N, n is 0, 1 or 2 and R is halogen, $C_1$-$C_4$-alkyl or $C_1$-$C_4$-haloalkyl, and where the radicals R may be different if n is 2, and

b) an active compound of the formula II,

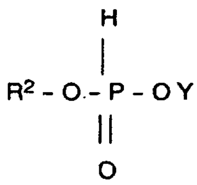

(II)

where:

Y is hydrogen, a metal atom of the 1st to 3rd main group of the Periodic Table of the Elements or a group $NR^3R^4R^5R^6$;

$R^2$ is hydrogen, a $C_1$-$C_{18}$-alkyl group which may be substituted by halogen or a nitro group, a $C_2$-$C_8$-alkenyl or $C_2$-$C_8$-alkinyl group which may be substituted by halogen or a nitro group, a $C_1$-$C_8$-alkoxy-$C_1$-$C_8$-alkyl or a $C_2$-$C_8$-alkenyl-$C_1$-$C_8$-alkyl group, an unsubstituted or substituted aryl group having 6 to 14 carbons, a $C_3$-$C_7$-cycloalkyl group, a $C_1$-$C_4$-alkylaryl group or a heterocyclic group having 5 or 6 ring atoms and a hetero atom from the group consisting of N, O and S, where the heterocyclic group is attached directly or via an aliphatic chain to the oxygen atom, and

$R^3$-$R^6$ independently of one another are each a $C_1$-$C_4$-alkyl group or a $C_1$-$C_4$-hydroxyalkyl group

in a synergistically effective amount.

**2.** A fungicidal mixture as claimed in claim 1, comprising a compound of the formula II where Y is a metal of the 3rd main group.

**3.** A fungicidal mixture as claimed in claim 2, wherein the metal of the 3rd main group is Al.

**4.** A fungicidal mixture as claimed in any of claims 1 to 3, comprising a compound II in which $R^2$ is hydrogen or a $C_1$-$C_4$-alkyl group.

**5.** A fungicidal mixture as claimed in claim 1, comprising a compound of the formula II in which Y is Al and $R^2$ is $CH_2$-$CH_3$.

**6.** A method for controlling harmful fungi, which comprises treating the harmful fungi, their habitat or the plants, seeds, soils, areas, materials or spaces to be kept free from them with a compound of the formula I as set forth in claim 1 and a compound of the formula II as set forth in claim 1.

**7.** A method as claimed in claim 6, wherein the harmful fungi, their habitat or the plants, seeds, soils, areas, materials or spaces to be kept free from them are treated with from 0.005 to 0.5 kg/ha of a compound I as set forth in claim 1.

**8.** A method as claimed in claim 6, wherein the harmful fungi, their habitat or the plants, seeds, soils, areas, materials or spaces to be kept free from them are treated with from 0.01 to 2 kg/ha of a compound II as set forth in claim 1.

## Revendications

**1.** Mélange fongicide contenant

a) un carbamate de formule I

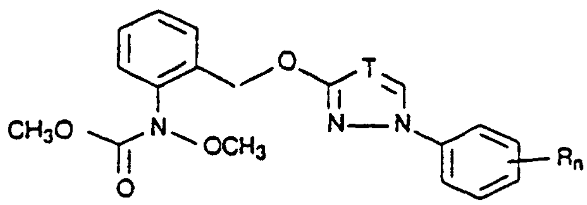

I

dans laquelle T représente CH ou N, n est égal à 0, 1 ou 2 et R représente un halogène, un groupe alkyle en C1-C4 ou halogénoalkyle en C1-C4, les substituants R pouvant être différents lorsque n est égal à 2, et

b) une substance active de formule II

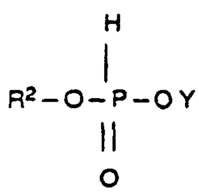

(II)

dans laquelle les symboles ont les significations suivantes :

Y : l'hydrogène, un atome d'un métal du groupe principal I à III de la Classification Périodique ou un groupe $NR^3R^4R^5R^6$ ;

$R^2$ : l'hydrogène, un groupe alkyle en C1-C18 qui peut être substitué par un halogène ou un groupe nitro, un groupe alcényle en C2-C8 ou alcynyle en C2-C8 qui peut être substitué par un halogène ou un groupe nitro, un groupe (alcoxy en C1-C8)alkyle en C1-C8 ou (alcényle en C2-C8)alkyle en C1-C8, un groupe aryle en C6-C14 éventuellement substitué, un groupe cycloalkyle en C3-C7, un groupe (alkyle en C1-C4) aryle ou un groupe hétérocyclique à cinq ou six atomes cycliques et un hétéroatome choisi parmi N, O ou S, le groupe hétérocyclique étant relié à l'atome d'oxygène directement ou par l'intermédiaire d'une chaîne aliphatique, et

$R^3$ à $R^6$ représentent chacun, indépendamment les uns des autres, un groupe alkyle en C1-C4 ou hydroxyalkyle en C1-C4,

en quantité synergétique efficace.

**2.** Mélange fongicide selon la revendication 1, contenant un composé de formule II dans laquelle Y représente un métal du groupe principal III.

**3.** Mélange fongicide selon la revendication 2, dans lequel le métal du groupe principal III est l'aluminium.

**4.** Mélange fongicide selon une des revendications 1 à 3, contenant un composé II pour lequel $R^2$ représente l'hydrogène ou un groupe alkyle en C1-C4.

**5.** Mélange fongicide selon la revendication 1, contenant un composé de formule II dans laquelle Y représente Al et $R^2$ représente $CH_2$-$CH_3$.

**6.** Procédé pour combattre les mycètes nuisibles, **caractérisé par le fait que** l'on traite les mycètes nuisibles, leur

habitat ou les végétaux, semences, sols, aires, matériaux ou locaux qu'on veut protéger contre les mycètes nuisibles, par un composé de formule I selon la revendication 1 et un composé de formule II selon la revendication 1.

**7.** Procédé selon la revendication 6, **caractérisé par le fait que** l'on traite les mycètes nuisibles, leur habitat ou les végétaux, semences, sols, aires, matériaux ou locaux qu'on veut protéger contre les mycètes par 0,005 à 0,5 kg/ha d'un composé I selon la revendication 1.

**8.** Procédé selon la revendication 6, **caractérisé par le fait que** l'on traite les mycètes nuisibles, leur habitat ou les végétaux, semences, sols, aires, matériaux ou locaux qu'on veut protéger contre les mycètes par 0,01 à 2 kg/ha d'un composé II selon la revendication 1.